# EUROPEAN PATENT SPECIFICATION

(11) **EP 0 837 904 B1**
(45) Date of publication and mention of the grant of the patent: **15.03.2000**
(21) Application number: 96923634.8
(22) Date of filing: 03.07.1996
(51) Int. Cl.: C08L 23/02

(54) **ENHANCED TOUGHENING AND IMPROVED PROCESSABILITY OF POLYOLEFINS AND POLYOLEFIN COPOLYMERS WITH LOW MOLECULAR WEIGHT ADDITIVES**
VERBESSERTE ZÄHIGKEIT UND VERARBEITBARKEIT VON POLYOLEFINEN UND POLYOLEFINCOPOLYMEREN MIT NIEDRIGEN MOLEKULARGEWICHT ADDITIVEN
AMELIORATION DE LA RESISTANCE MECANIQUE ET DE L'APTITUDE A LA TRANSFORMATION DE POLYOLEFINES ET DE COPOLYMERES POLYOLEFINIQUES AVEC DES ADDITIFS A FAIBLE POIDS MOLECULAIRE

(30) Priority: 07.07.1995 US 499266
(43) Date of publication of application: 29.04.1998
(73) Proprietor: EXXON RESEARCH AND ENGINEERING COMPANY, Florham Park, New Jersey 07932-0390 (US)
(72) Inventor: PEIFFER, Dennis, George, Annandale, NJ 08801 (US); CHLUDZINSKI, James, Joseph, Whitehouse, NJ 08889 (US); LUE, Ching-Tai, Houston, TX 77062 (US); ERDERLY, Thomas, Craig, Baytown, TX 77521 (US)
(74) Representative: Somers, Harold Arnold
(86) International application number: US9611264
(87) International publication number: WO9703123

(56) References cited:
- EP-A- 0 541 869
- US-A- 3 974 240

## Description

### FIELD OF THE INVENTION

The present invention relates to polyolefin and polyolefin copolymer compositions. More particularly, the present invention is concerned with enhancing the toughness and processability of polyolefin polymers and copolymers that have been prepared using single-site catalysts.

### BACKGROUND OF THE INVENTION

In recent years, a new class of polyolefin and polyolefin copolymers has been developed based on use of the so-called single site catalysts. These catalysts, which are organo-metallic coordination compounds of cyclopentadienyl derivatives of Group IVB metals of the Periodic Table of the Elements (56th Ed. of the Handbook of Chemistry and Physics, CRC Press (1975)), produce polyolefins that possess a more narrow molecular weight distribution than can be achieved with conventional Ziegler-Natta type catalysts. This narrow molecular weight distribution results in polymer materials that have better physical properties than that achieved with typical Ziegler-Natta type catalysts.

Notwithstanding these improved physical properties, however, there still remains a need to further toughen polymers prepared from single site catalysts. Additionally, because of the narrow molecular weight distribution of these materials, they tend to be more difficult to process. Consequently, there also is a need to provide a method for enhancing the processability of polyolefins and polyolefin copolymers prepared with single site catalysts.

### SUMMARY OF THE INVENTION

The present invention is based on the discovery that copolymers that are prepared in the presence of a single site catalyst have their toughness and processability enhanced by including in the polymer or copolymer an effective amount of a low molecular weight ionomeric copolymer and anionic sufactant.

Thus, in one embodiment of the present invention, there is provided a composition comprising a major amount of the polyolefin copolymer and a minor amount of a low molecular weight ionomeric polymer and anionic surfactant.

These and other embodiments of the present invention will become apparent upon reading of the Detail Description of the Invention which follows.

### DETAILED DESCRIPTION OF THE INVENTION

The polymers useful in the present invention include polyolefins and polyolefin copolymers such as ethylene alpha olefin copolymers that have been prepared using single site catalysts, especially those catalysts described in U.S. Patent 5,391,629. The polymers and copolymers of the present invention have weight average molecular weights of between about 30,000 to about 1 million and preferably between about 50,000 to about 200,000.

The compositions of the present invention will also include a minor amount of a low molecular weight ionomeric polymer or copolymer, that is, one having a weight average molecular weight of between about 1,000 to 20,000 and preferably between 2,000 to 10,000.

The ionomeric polymer have from 0.1 to 200 milli-equivalents of pendant ionomeric groups per 100 grams of polymer and preferably from about 1.0 to 100 milli-equivalents of pendant ionomeric groups. Examples of useful ionomeric groups are carboxylate, phosphate, and sulfonate. The ionomeric groups are also 50% neutralized with Group IA, IIA, IB or IIB metal (see the previously cited Table of Elements), an amine or ammonia.

The amount of ionomeric polymer or copolymer will be used in amounts ranging from 0.5 to 20 weight % based on the total weight of the composition and typically in the range of 0.5 to 10.0 wt%.

Ionomeric polymers and copolymers especially suitable in the practice of the present invention include ethylene-methacrylic acid copolymers, sulfonated polystyrene, sulfonated t-butyl styrene, sulfonated ethylene copolymers, sulfonated propylene copolymers, sulfonated styrene-acrylonitrile copolymers, sulfonated styrene-methyl methacrylate copolymers, sulfonated polyisobutylene, sulfonated ethylene-propylene terpolymers, sulfonated polyisoprene, and sulfonated elastomers and their copolymers.

The anionic surfactant used in the compositions of the present invention include alkali metal salts of alkyl sulfonates and carboxylates having from 6 to 20 carbon atoms and alkaline metal salts of alkenyl sulfates having from 6 to 20 carbon atoms in the alkenyl group. The anionic surfactant will be used in a minor amount in the composition of the present invention. Typically it will constitute about 1 wt. % based on the total weight of the composition and preferably in the range of 0.1 to 10.0 wt.%.

The compositions of the present invention can be prepared by any convenient method. For example, the compositions can be prepared by mixing in a suitable blender such as a Brabender mixer.

### EXAMPLES

The following examples will demonstrate the improved toughness and enhanced processability of polyolefin compositions of the present invention. In all of the examples which follow the base polymer or copolymer was prepared using a single site catalyst. The compositions were melt processed in a Brabender mixer heated at 193°C. The materials were mixed for five minutes at 100 RPM. After mixing the material was cooled to room temperature, cut into pieces and compression molded at 193°C into tensile specimens. The specimens were compression molded into approximately 2" x 2" x 0.02" pads at 29 tons pressure. The appropriate size sample for the tensile testing measurements were cut from these pads.

The mechanical properties were obtained from an Instron® Tensile Tester with a clamp speed of 0.2 cm/min.

The ionomers used in the examples were metal neutralized, ethylene methacrylic acid polymers having a weight average molecular weight of 2,000g/mole.

The surfactant used was a sodium neutralized alpha olefin sulfonate having a carbon number of about 12 with a head group composed of a sodium neutralized sulfonate group.

The torque reduction is measured directly on the Brabender melt mixer. The reduction in torque is based on comparing the torque value of the additive-containing melt with one containing no additives.

### Example 1

An ethylene-butene copolymer prepared using a single site catalyst and having a density of 0.873g/cc and a melt index of 4.5 was melt blended with varying amounts of the ionic surfactant and the low molecular weight ionomeric material in which the metal was zinc. Tensile properties of the various blends and the reduction in torque were obtained and are listed in Table I which follows. Also included in Table I are results obtained without the addition of surfactant and ionomer.

The data confirms that the addition of the combination of surfactant and lower molecular copolymer ionomer to the elastomeric ethylene copolymer product reduces the torque, i.e., improves processability. In addition, the solid state properties show an overall enhancement in the mechanical properties.

### Example 2

Table 2 lists the mechanical properties of an ethylene-butene copolymer (See Example 1) that was melt blended, as detailed in Example 1, with a 0.5 wt.%of the alpha olefin sulfonate surfactant and varying amounts of a low molecular weight ionomer which was sodium neutralized. The tensile strength of the mixtures are included in the tables as well as the energy to break and the torque reduction (100 RPM). The results are compared to a run without the addition of the surfactant.

The results again confirm the utility of the mixture of the low molecular ionomer copolymer and surfactant to markedly improve the mechanical properties and the processability.

### Example 3

In this Example, various runs were conducted using a linear low density polyethylene possessing a crystallinity in the range of 40 to 50% and the zinc neutralized ionomer. The procedure used is described in Example 1 and the results are given in Table 3 which follows.

### Example 4

Again a series of runs were conducted using a linear low density polyethylene of Example 3 and following the procedure outlined in Example 1; however in this instance the sodium salt of the ionomeric copolymer was employed. Results are set forth in Table 4 which follows.

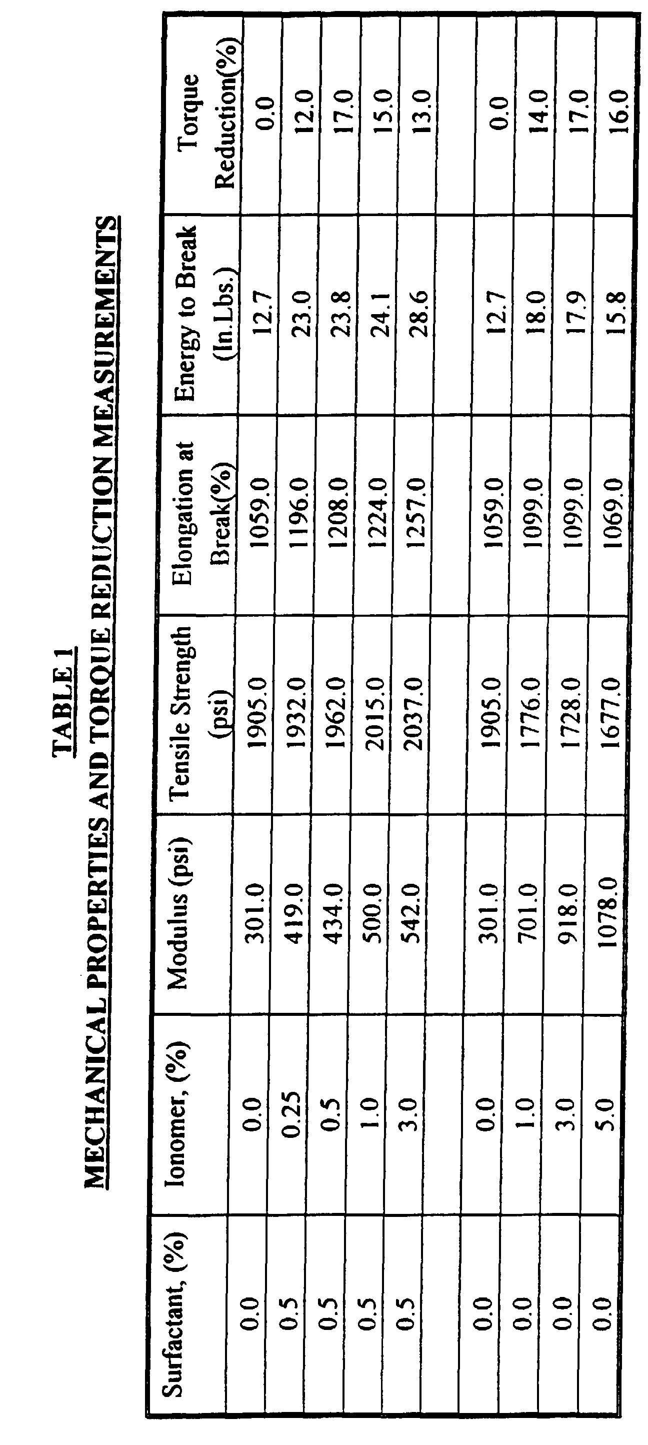

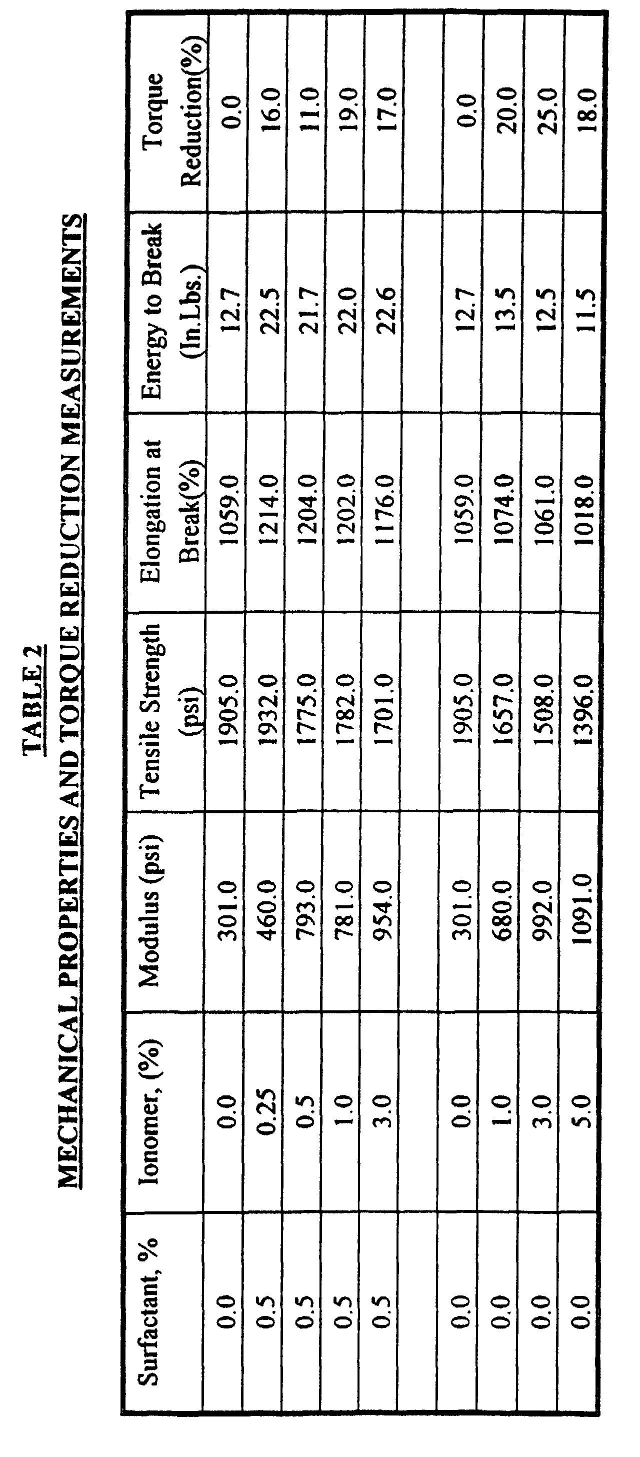

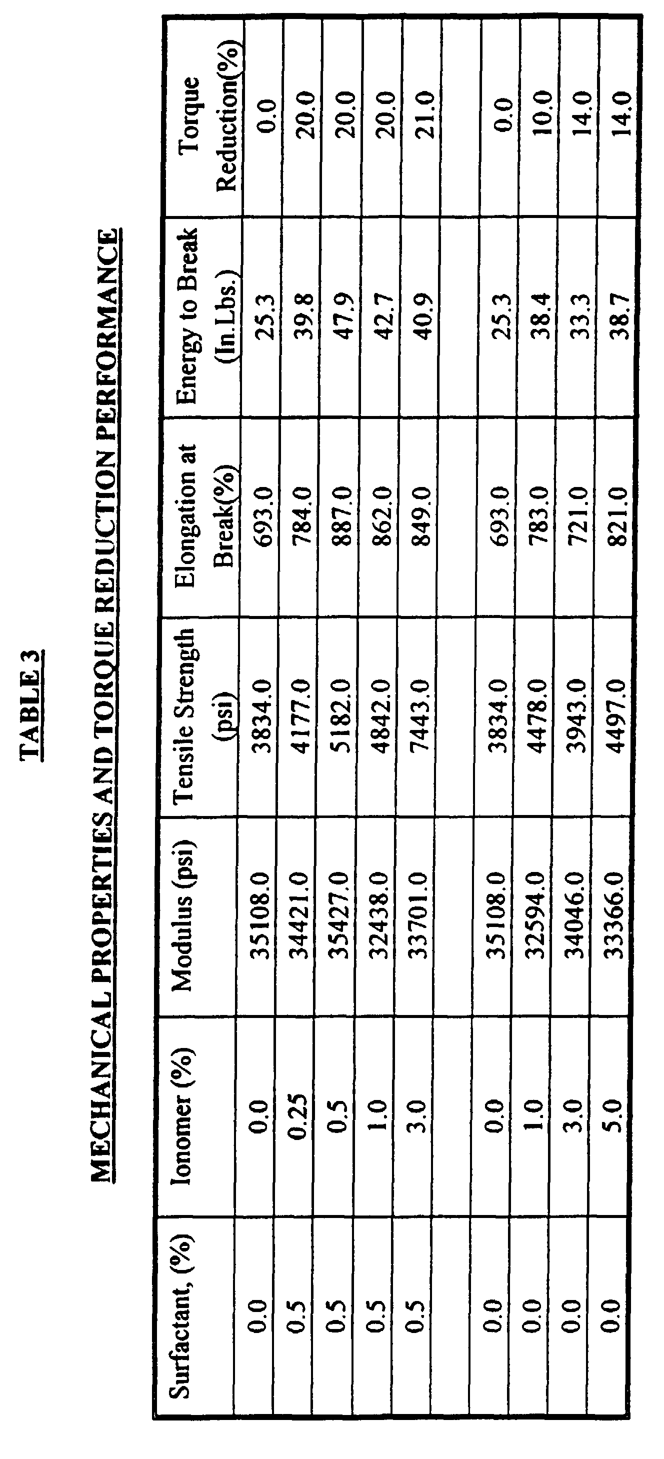

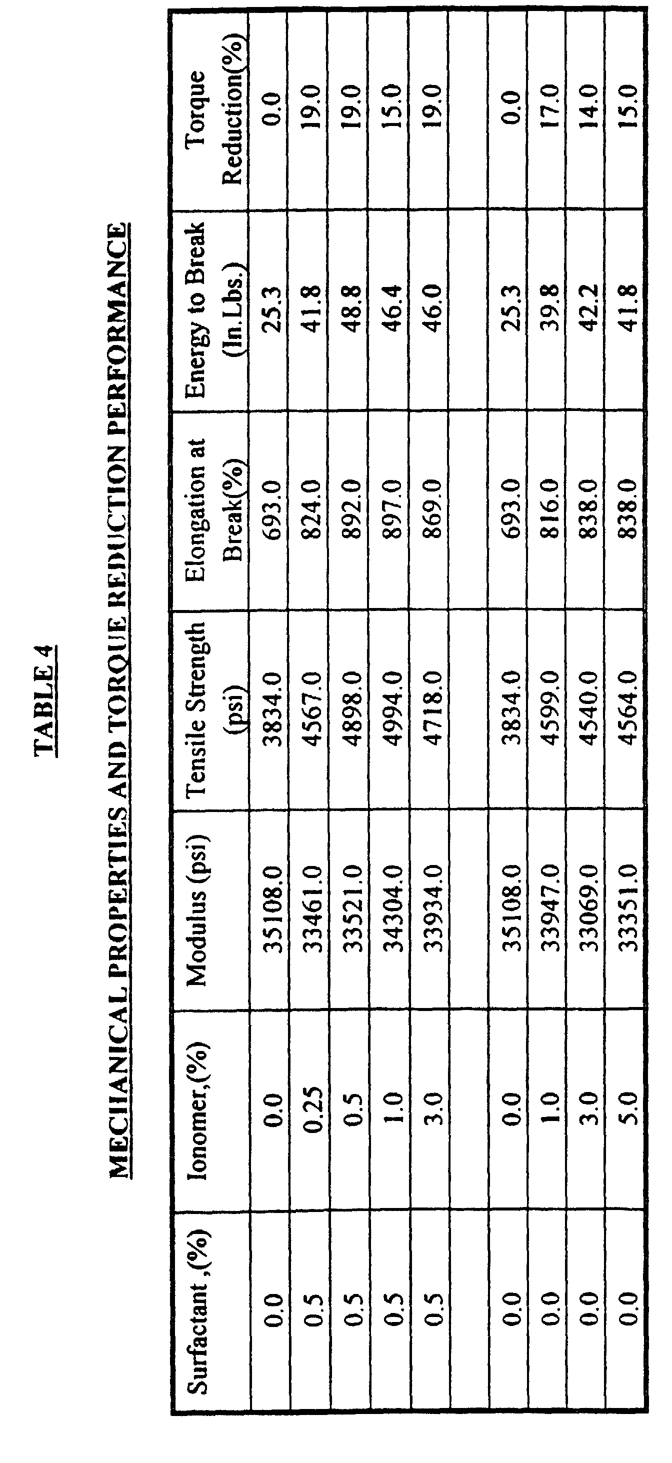

## Claims

1. A composition comprising:
(a) a major amount of a first polyolefin or polyolefin copolymer prepared using a single site catalyst of a cyclopentadienyl derivative of a Group IVB metal and having a weight average molecular weight of between about 30,000 to about 1 million; and
(b) a minor amount of (i) a second polymer having a weight average molecular weight in the range of about 1,000 to about 20,000, and from 0.1 to 200 milli-equivalents of pendant ionomeric groups per 100 grams of polymer, the ionomeric groups being selected from the group consisting of carboxylate, phosphate and sulfonate groups which are about 50% metal, amine or ammonia neutralized and, (ii) an anionic surfactant.

2. The composition of claim 1, wherein the second polymer is about 50% neutralized with a metal.

3. The composition of claim 1 or claim 2, wherein the metal is zinc.

4. The composition of claim 1 or 2, wherein the metal is sodium.

5. The composition of any one of the preceding claims, wherein the second polymer is present in an amount ranging from 0.5 to 20 wt.%, based on the total weight of the composition.

6. The composition of any one of the preceding claims, wherein the anionic surfactant is selected from alkali metal salts of alkyl sulfonates and carboxylates of from 6 to 20 carbon atoms, alkali metal salts of alkenyl sulfates of from 6 to 20 carbon atoms and mixtures thereof.

7. The composition of any preceding claim, wherein the surfactant is present in an amount ranging from 0.1 to 10 wt.% based on the total weight of the composition.

## Patentansprüche

1. Zusammensetzung, die
(a) eine größere Menge erstes Polyolefin oder Polyolefincopolymer, das unter Verwendung eines Katalysators mit singulärer aktiver Stelle aus Cyclopentadienylderivat von Gruppe IVB Metall hergestellt ist und ein durchschnittliches Molekulargewicht (Gewichtsmittel) von etwa 30 000 bis etwa 1 000 000 aufweist, und
(b) eine geringere Menge (i) zweites Polymer, das ein durchschnittlichen Molekulargewicht (Gewichtsmittel) im Bereich von etwa 1000 bis etwa 20 000 und 0,1 bis 200 Milliäquivalente an seitenständigen ionomeren Gruppen auf 100 g Polymer aufweist, wobei die ionomeren Gruppen ausgewählt sind aus der Gruppe bestehend aus Carboxylat-, Phosphat- und Sulfonatgruppen, die etwa 50 % metall-, amin- oder ammoniakneutralisiert sind, und (ii) anionisches Tensid
umfaßt.

2. Zusammensetzung nach Anspruch 1, bei der das zweite Polymer zu etwa 50 % mit Metall neutralisiert ist.

3. Zusammensetzung nach Anspruch 1 oder Anspruch 2, bei der das Metall Zink ist.

4. Zusammensetzung nach Anspruch 1 oder 2, bei der das Metall Natrium ist.

5. Zusammensetzung nach einem der vorhergehenden Ansprüche, bei der das zweite Polymer in einer Menge im Bereich von 0,5 bis 20 Gew.% vorhanden ist, bezogen auf das Gesamtgewicht der Zusammensetzung.

6. Zusammensetzung nach einem der vorhergehenden Ansprüche, bei der das anionische Tensid ausgewählt ist aus Alkalimetallsalzen von Alkylsulfonaten und -carboxylaten mit 6 bis 20 Kohlenstoffatomen, Alkalimetallsalzen von Alkenylsulfaten mit 6 bis 20 Kohlenstoffatomen und Mischungen derselben.

7. Zusammensetzung nach einem der vorhergehenden Ansprüche, bei'der das Tensid in einer Menge im Bereich von 0,1 bis 10 Gew.% vorhanden ist, bezogen auf das Gesamtgewicht der Zusammensetzung.

## Revendications

1. Composition comprenant :
(a) une quantité majeure d'une première polyoléfine ou d'un premier copolymère polyoléfinique préparé(e) en utilisant un catalyseur local unique d'un dérivé de cyclopentadienyle d'un métal du groupe IVb et ayant un poids moléculaire de moyenne pondérée compris entre environ 30000 et environ 1000000 ; et
(b) une quantité mineure (i) d'un deuxième polymère ayant un poids moléculaire de moyenne pondérée compris dans la plage allant environ de 1000 à environ 20000, et de 0,1 à 200 milliéquivalents de groupes ionomériques pendants pour 100 grammes de polymère, les groupes ionomériques étant choisis parmi le groupe constitué des groupes carboxylates, phosphates et sulfonates qui sont neutralisés à environ 50 % par un métal, une amine ou l'ammoniac, et (ii) d'un agent tensioactif anionique.

2. Composition selon la revendication 1, dans laquelle le deuxième polymère est neutralisé environ à 50 % avec un métal.

3. Composition selon la revendication 1 ou la revendication 2, dans laquelle le métal est le zinc.

4. Composition selon la revendication 1 ou la revendication 2, dans laquelle le métal est le sodium.

5. Composition selon l'une quelconque des revendications précédentes, dans laquelle le deuxième polymère est présent dans une quantité comprise dans une plage allant de 0,5 à 20 % en poids sur la base du poids total de la composition.

6. Composition selon l'une quelconque des revendications précédentes, dans laquelle l'agent tensioactif anionique est choisi parmi les sels de métal alcalin d'alkylsulfonates et de carboxylates de 6 à 20 atomes de carbone, les sels de métal alcalin d'alcénylsulfates de 6 à 20 atomes de carbone, et leurs mélanges.

7. Composition selon l'une quelconque des revendications précédentes, dans laquelle l'agent tensioactif est présent dans une quantité comprise dans une plage allant de 0,1 à 10 % en poids sur la base du poids total de la composition.
